# FASCICULE DE BREVET EUROPEEN

(11) **EP 4 004 653 B1**
(45) Date de publication et mention de la délivrance du brevet: **25.02.2026**
(21) Numéro de dépôt: 20732896.4
(22) Date de dépôt: 16.06.2020
(51) Int. Cl.: G04B 31/06, G04D 3/00, B23K 26/0622, B23K 26/382, B23K 26/00, B23K 103/00

(54) **PIERRE, NOTAMMENT POUR UN MOUVEMENT D'HORLOGERIE, ET SON PROCEDE DE FABRICATION**
STEIN, INSBESONDERE FÜR EIN UHRWERK, UND SEIN HERSTELLUNGSVERFAHREN
STONE, PARTICULARLY FOR CLOCK MOVEMENT, AND METHOD FOR MANUFACTURING SAME

(30) Priorité: 26.07.2019 EP 19188644
(43) Date de publication de la demande: 01.06.2022
(73) Titulaire: Comadur S.A., 2400 Le Locle (CH)
(72) Inventeur: BESUTTI, Bruno, 25140 Charquemont (FR); RETROUVEY, Sébastien, 39380 Chissey sur Loue (FR); GIRY, Benoit, 25130 Villers-le-lac (FR); VUILLE, M. Pierry, 2338 Les Emibois (CH)
(74) Mandataire: ICB SA
(86) Numéro de dépôt international: PCT/EP2020/066637
(87) Numéro de publication internationale: WO 2021/018464

(56) Documents cités:
- EP-A1- 3 367 182
- EP-B1- 2 778 801
- WO-A1-2009/060074
- CH-A2- 705 944
- US-A1- 2013 175 243
- KEMNITZER MATTHIAS ET AL: "Next-generation of high-power, sub-300 fs lasers with >100 W for industrial applications", 2017 CONFERENCE ON LASERS AND ELECTRO-OPTICS EUROPE & EUROPEAN QUANTUM ELECTRONICS CONFERENCE (CLEO/EUROPE-EQEC), IEEE, 25 June 2017 (2017-06-25), pages 1, XP033239695, DOI: 10.1109/CLEOE-EQEC.2017.8086768

## Description

### Domaine de l'invention

L'invention porte sur un procédé de fabrication d'une pierre, notamment pour un mouvement d'horlogerie.

L'invention porte aussi sur une pierre, notamment d'un palier, munie d'un rebord.

L'invention porte également sur un mouvement d'horlogerie comportant une telle pierre.

### Arrière-plan de l'invention

Dans l'état de la technique de l'horlogerie, les pierres de type rubis ou saphir, sont notamment utilisées pour former des contre-pivots ou des éléments de guidage, appelés coussinets, dans des pièces d'horlogerie. Ces contre-pivots et éléments de guidage sont destinés à entrer en contact avec des pivots afin de rendre ces derniers mobiles en rotation et ce, avec un frottement minimal. Ainsi, ils forment, par exemple, tout ou partie d'un palier d'un axe monté en rotation. Les éléments de guidage comprennent généralement un trou traversant pour y insérer l'axe du pivot.

En principe, on utilise des pierres synthétiques dans les mouvements horlogers. On connait en particulier le procédé de type Verneuil pour fabriquer des pierres de type monocristalline. Il existe aussi les pierres de type poly-cristalline, que l'on fabrique par pressage d'un précurseur en vue de l'obtention d'un corps vert de la future pierre à partir d'un outil de pressage. Les pierres sont ensuite usinées pour obtenir une forme finie aux dimensions désirées.

En particulier, concernant les éléments de guidage en pierre polycristalline, l'outil de pressage est par exemple pourvu d'un fil participant à l'édification d'une ébauche de trou. Les pierres de type monocristallines sont d'abord percées au laser pour obtenir l'ébauche de trou. La dimension finale du trou est obtenue par la suite grâce à l'usinage.

Cependant, les techniques d'usinage de ces pierres, qu'elles soient monocristallines ou polycristallines, ne permettent pas d'obtenir toutes les formes que l'on souhaite. En effet, l'usinage classique n'est pas assez précis pour certaines formes. En particulier, il n'est pas possible de fonctionnaliser les surfaces de la pierre au-delà de simples trous ou évidements d'ébauche qu'il faut finaliser par la suite. Le document CH705944A2 présente un tel procédé de fabrication.

### Résumé de l'invention

Le but de la présente invention est de palier tout ou partie les inconvénients cités précédemment, en proposant un procédé de fabrication d'une pierre permettant la réalisation de formes particulières et de fonctionnalisation des surfaces avec précision.

A cet effet, l'invention porte sur un procédé de fabrication d'une pierre selon la revendication 1 annexée.

Ainsi, il est possible d'enlever de la matière à la pierre de façon extrêmement précise, et ainsi d'obtenir des formes et des surfaces impossibles à former avec des méthodes laser connues de l'état de l'art. Un tel dispositif permet de focaliser le rayon laser avec une grande précision, tour en annulant au moins en partie l'angle conique du laser, qui est dû à la focalisation du laser. En effet, la focalisation engendre un laser en forme de cône, qui ne permet pas d'avoir un diamètre de rayon identique sur toute la hauteur au point de localisation du laser, de sorte que l'ablation de matière n'est pas. Le dispositif permet d'annuler l'angle du cône sur au moins un côté du rayon, ce qui permet notamment d'obtenir des coupes droites. Ces coupes droites ne peuvent être obtenues avec des lasers de découpe classiques.

De plus, les impulsions ultra-courtes du laser permettent d'éviter un échauffement thermique de la pierre, qui nuisent à la qualité de la pierre.

En outre, l'état de surface Ra de la pierre obtenue avec le procédé selon l'invention est de l'ordre de 0.1µm, ce qui permet ensuite de polir la pierre avec des moyens conventionnels de polissage, par exemple pour obtenir un Ra de l'ordre 0.025µm. Ainsi, ce procédé apporte des avantages importants tout en gardant une mise en œuvre sans grande complexité.

Selon un mode de réalisation particulier de l'invention, l'ablation est effectuée couche par couche, chaque couche ayant une épaisseur comprise dans un intervalle allant de 1 à 10µm, de préférence de 2 à 4µm.

Selon un mode de réalisation particulier de l'invention, les impulsions ont une durée comprise dans un intervalle allant de 200 à 400 fs, de préférence dans un intervalle allant de 250 à 350 fs, voire de 280 à 300 fs.

Selon un mode de réalisation particulier de l'invention, le laser a une longueur d'onde comprise dans un intervalle allant de 400 à 600nm, de préférence entre 450 et 550nm, voire de 500nm.

Selon un mode de réalisation particulier de l'invention, le corps minéral étant de type monocristallin, et comprenant par exemple du Al₂O₃, le procédé comprend une étape préalable de fabrication du corps par un procédé de type Verneuil.

Selon un mode de réalisation particulier de l'invention, le corps minéral étant de type polycristallin, et comprenant par exemple du polyrubis de type Al₂O₃Cr ou de la Zircone de type ZrO₂, le procédé comporte les étapes préalables suivantes :
- réalisation d'un précurseur à partir d'un mélange d'au moins un matériau en poudre avec un liant ;
- pressage du précurseur afin de former un corps vert, le pressage état opéré à l'aide d'une matrice supérieure et d'une matrice inférieure, et
- frittage dudit corps vert afin de former le corps minéral de la future pierre dans ledit au moins un matériau.

Selon un mode de réalisation particulier de l'invention, le procédé comprend une étape supplémentaire de finition, par exemple un rodage et/ou un brossage et/ou un polissage du corps minéral après l'étape laser, en particulier sur les zones d'ablation.

Selon un mode de réalisation particulier de l'invention, l'étape d'ablation laser comprend le creusement d'un trou traversant le corps.

Selon un mode de réalisation particulier de l'invention, l'étape d'ablation laser comprend le creusement d'un cône d'entrée du trou traversant.

Selon un mode de réalisation particulier de l'invention, l'étape d'ablation laser comprend le creusement d'une face pour former un rebord périphérique sur la face.

Selon un mode de réalisation particulier de l'invention, l'étape d'ablation laser comprend le creusement de la face pour former une zone convexe.

Selon un mode de réalisation particulier de l'invention, l'étape d'ablation laser comprend le creusement d'une face périphérique du corps pour former une face périphérique évasée du corps.

Selon un mode de réalisation particulier de l'invention, l'étape d'ablation laser comprend le creusement d'un évidement de rétention d'huile autour du trou traversant sur une face du corps.

Selon un mode de réalisation particulier de l'invention, l'étape d'ablation laser comprend l'ablation d'au moins une partie d'une face de la pierre pour la rendre plane.

L'invention porte également sur une pierre minérale de type monocristalline ou polycristalline selon la revendication 15 annexée.

Selon un mode de réalisation particulier de l'invention, la pierre comprend du Al₂O₃ si elle est de type monocristallin, et elle comprend du polyrubis de type Al₂O₃Cr ou de la Zircone de type ZrO₂ si elle est de type polycristalline.

Selon un mode de réalisation particulier de l'invention, la face comprend une face d'appui pour le contre-pivot, la face d'appui étant disposée au pied du rebord interne, la face d'appui décrivant un cercle.

Selon un mode de réalisation particulier de l'invention, la pierre comprenant un trou traversant centré, la face comprend une zone convexe délimitée entre la face d'appui et le trou, la zone étant convexe concentriquement depuis la face d'appui jusqu'au trou.

L'invention porte également sur une pièce d'horlogerie comprenant une telle pierre, notamment pour un palier.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est un schéma synoptique d'un premier mode de réalisation d'une pierre selon le procédé de l'invention ;
- la figure 2 est un schéma synoptique d'un deuxième mode de réalisation d'une pierre selon le procédé de l'invention ;
- la figure 3 est une représentation schématique d'un corps minéral de type polycristallin obtenu après l'étape de frittage du deuxième mode de réalisation du procédé de l'invention ;
- la figure 4 est une représentation schématique d'un corps minéral de type polycristallin obtenu après une étape d'usinage du deuxième mode de réalisation du procédé de l'invention ;
- la figure 5 est une représentation schématique d'une pierre obtenue grâce au procédé après l'étape d'ablation laser pour les deux modes de réalisation de l'invention,
- la figure 6 est une vue à plus grande échelle d'une partie d'une pierre de la figure 5 ;
- la figure 7 est une représentation schématique d'une pierre comprenant un rebord selon l'invention, qui est associée à un contre-pivot.

### Description détaillée des modes de réalisation préférés

Comme expliqué ci-dessus, l'invention se rapporte à un procédé de fabrication d'une pierre susceptible de former un élément de guidage d'une pièce d'horlogerie. La pierre est par exemple destinée à entrer en contact avec un pivot afin de rendre ce dernier mobile en rotation avec un frottement minimal. On comprend donc que la présente invention permet notamment de réaliser une pierre pouvant former tout ou partie d'un palier d'un axe monté en rotation.

La pierre est formée à partir d'un corps minéral, qui peut être de type monocristallin dans un premier mode de réalisation, ou de type polycristallin dans un deuxième mode de réalisation. Pour le monocristallin, le corps comprend par exemple du Al₂O₃, tandis que pour le polycristallin, le corps comprend par exemple du polyrubis de type Al₂O₃Cr ou de la Zircone de type ZrO₂. Selon le mode de réalisation, le procédé d'obtention du corps minéral est différent.

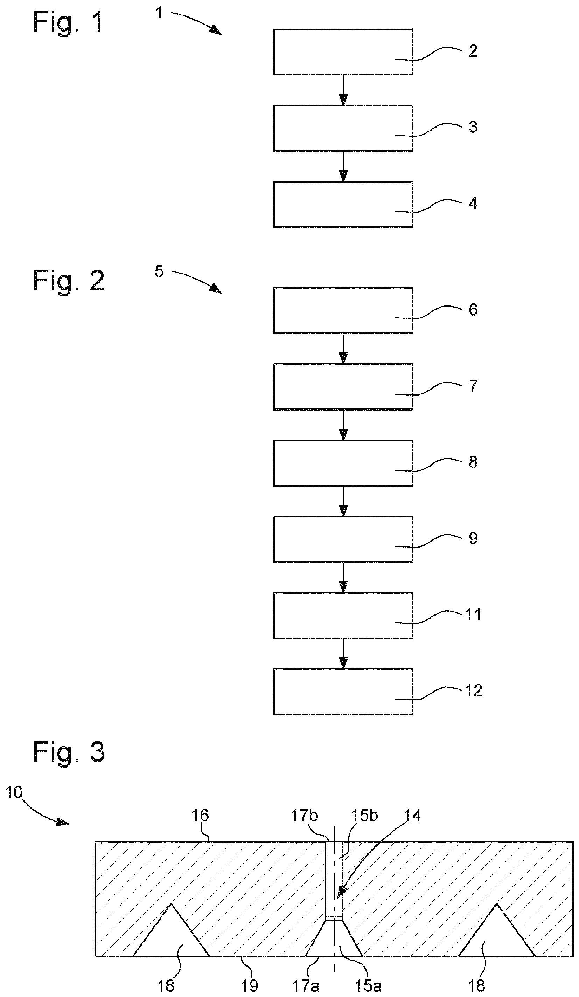

Dans le premier mode de réalisation du procédé 1, représenté sur la figure 1, le procédé 1 comprend une première étape 2 de fabrication du corps minéral cristallin par un procédé de type Verneuil, qui est bien connu dans le domaine de l'horlogerie. Le matériau est formé à partir d'une poudre fondue par un chalumeau oxhydrique à plus de 2000°C. Le corps se cristallise après refroidissement en dessous du point de fusion. Le corps est dimensionné de manière à obtenir des dimensions proches de celles souhaitées, notamment pour faciliter son usinage futur.

Selon l'invention, le premier mode de réalisation comprend une deuxième étape d'ablation laser 3 pour donner une forme définitive à la pierre. L'étapes d'ablation laser est décrite plus loin dans la description. Enfin, une troisième étape de finition 4 permet de donner à la pierre un état de surface compatible avec son utilisation. On cherche par exemple à obtenir un état de surface Ra=0.025µm. Une telle étape de finition peut ainsi comporter un rodage et/ou un brossage et/ou un polissage permettant l'ajustage des cotes finales et/ou le retrait d'arêtes et/ou la modification locale de la rugosité.

Dans le deuxième mode de réalisation 5 du procédé, représenté sur la figure 2, un tel procédé comporte une première étape 6 de réalisation d'un précurseur à partir d'un mélange d'au moins un matériau en poudre avec un liant. Ce matériau peut être de manière non limitative et non exhaustive de la céramique. Cette étape est destinée à former un précurseur à partir d'une poudre à base de céramique prise dans le liant.

Dans ce contexte, la poudre à base de céramique peut comporter au moins un oxyde métallique, un nitrure métallique ou un carbure métallique. A titre d'exemple, la poudre à base de céramique peut comporter de l'oxyde d'aluminium afin de former du saphir synthétique ou un mélange d'oxyde d'aluminium et d'oxyde de chrome afin de former du rubis synthétique, ou encore de l'oxyde de zirconium. De plus, le liant peut être de natures variées comme, par exemple, de types polymères ou de types organiques.

Le deuxième mode de réalisation comporte ensuite une deuxième étape de pressage 7 du précurseur à partir d'une matrice supérieure et d'une matrice inférieure d'un dispositif de pressage, non représenté sur les figures, afin de former le corps vert de la future pierre.

Le deuxième mode de réalisation comporte une troisième étape 8 de frittage du corps vert afin de former un corps 10 visible sur la figure 3 dans le matériau qui peut être ainsi que nous l'avons évoqué précédemment, de la céramique. Autrement dit, cette étape 8 est destinée à fritter le corps vert afin de former un corps 10 en céramique de la future pierre percée. Préférentiellement selon l'invention, l'étape de frittage 8 peut comporter une pyrolyse.

Sur la figure 3, le corps 10 comprend une ébauche de trou traversant 14 pourvue des parties supérieure et inférieure 15a, 15b qui sont de formes différentes. En effet, la partie inférieure 15b qui constitue l'ébauche de l'élément fonctionnel a une forme conique et la partie supérieure 15a qui comprend l'ébauche du trou traversant 14 à une forme cylindrique. Un tel trou traversant 14 comprend aussi une première ouverture 17a définie dans le corps vert 10 et débouchant dans la face inférieure 19 de ce corps vert 10. Le trou traversant 14 comprend aussi une seconde ouverture 17b définie dans le corps vert 10 et débouchant dans la face supérieure 16 de ce corps vert 10.

Le corps 10 comprend de plus un sillon 18 sur sa face inférieure 19. Le sillon 18 décrit un chemin sphérique centré autour du trou traversant 14 et a une section de forme triangulaire. Ce sillon 18 est formé par la matrice inférieure du dispositif de pressage, la matrice inférieure comportant une forme en négatif du sillon 18, telle une nervure annulaire.

On notera qu'une telle ébauche permet notamment de former le cône d'engagement de la pierre percée pour un montage plus aisé du pivot notamment lorsqu'il s'agit de le monter à l'aveugle dans la pierre percée formant dans cet exemple un élément de guidage. On comprend donc que la forme du trou traversant 14 est apportée par la forme d'un poinçon de la matrice inférieure du dispositif de pressage. Ainsi, une telle étape de pressage 7 est destinée à compresser, à l'aide de la matrice supérieure et la matrice inférieure, le précurseur afin de former ledit corps vert de la future pierre percée avec le corps 10 qui comprend notamment l'ébauche du trou traversant 14.

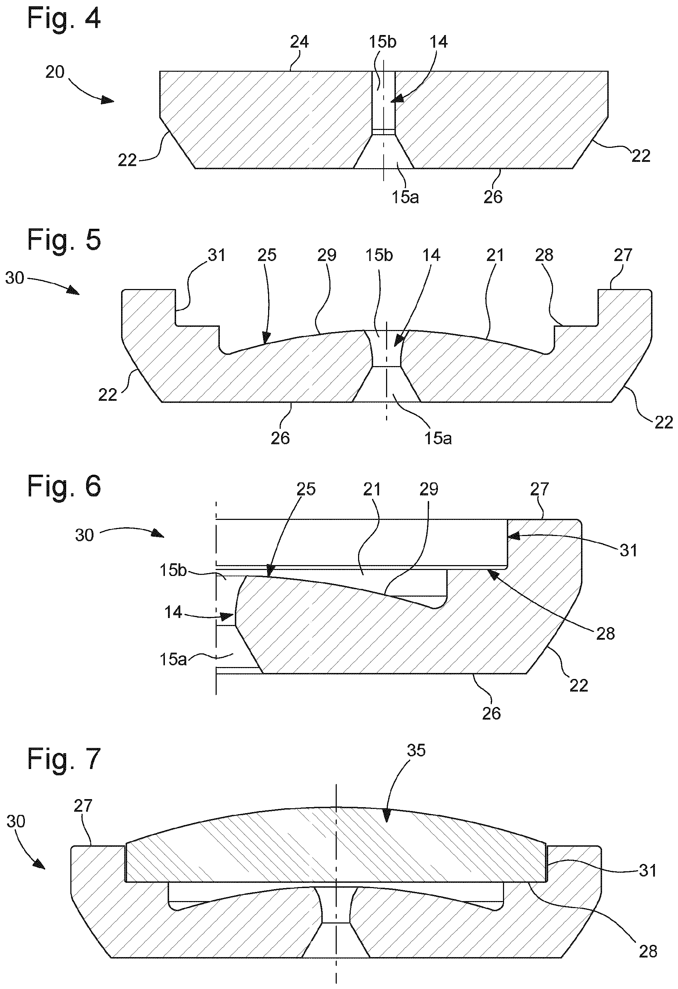

Le deuxième mode de réalisation comprend une quatrième étape d'usinage 9 du corps 10 de la future pierre de la figure 4. La quatrième étape comporte une première sous-étape de tournage pour façonner la paroi périphérique de la pierre. On enlève de la matière jusqu'au sommet du sillon de manière à obtenir une paroi périphérique 22 au moins en partie évasée. L'étape d'usinage comprend aussi une sous-étape de façonnage de la face supérieure 24 et de la face inférieure 26 pour obtenir une épaisseur de pierre prédéfinie.

En outre, cette étape comporte aussi le dimensionnement du trou traversant permettant de relier le cône de l'élément fonctionnel 15a à ladite face supérieure 24.

Le deuxième mode de réalisation comprend une cinquième étape 11 d'ablation laser pour donner une forme définitive à la pierre.

Enfin, une sixième étape 12 de finition permet de donner à la pierre un état de surface compatible avec son utilisation. Une telle étape de finition peut ainsi comporter un rodage et/ou un brossage et/ou un polissage permettant l'ajustage des cotes finales et/ou le retrait d'arêtes et/ou la modification locale de la rugosité.

Les deux modes de réalisation fournissent un corps monobloc monocristallin ou polycristallin selon le mode de réalisation.

Selon l'invention, lors de l'étape d'ablation laser 3, 11, le corps est soumis à une ablation de matière par balayage sur au moins une face du corps d'un rayonnement laser à impulsions ultra-courtes dont la durée est inférieure à cent picosecondes, et dont le rayon est guidé par un système à précession à cinq ou six axes configuré pour annuler au moins en partie l'angle du cône dû à la focalisation du laser. Un dispositif avec système à précession d'au moins trois axes est par exemple décrit dans le document WO 2017029210. Il existe différents types de dispositifs permettant d'annuler au moins en partie l'angle conique du laser. Certains dispositifs utilisent un système de précession à cinq ou six axes.

Ainsi, le rayon laser a au moins un bord sensiblement droit, de sorte que l'on peut creuser la surface de la pierre et lui donner une forme spécifique. L'ablation est effectuée couche par couche, le laser balayant une zone du corps pour le creuser. Chaque couche a par exemple une épaisseur comprise dans un intervalle allant de 1 à 10µm, de préférence de 2 à 4µm. On enlève de la matière couche par couche jusqu'à obtenir la forme souhaitée.

Le laser a par exemple une longueur d'onde comprise entre 400 et 600nm, de préférence entre 450 et 550nm, voire de l'ordre de 500nm. La durée de la pulsation est inférieure à la picoseconde, par exemple comprise dans un intervalle allant de 200 à 400 fs, de préférence dans un intervalle allant de 250 à 350 fs, voire de 280 à 300 fs. De telles caractéristiques permettent de creuser le corps sans nuire aux propriétés du matériau formant la pierre.

Comme le montre la pierre obtenue sur les figures 5 et 6, le procédé permet en particulier de creuser le corps 20 pour obtenir un rebord périphérique 27 sur la face supérieure 25 de la pierre 30. La face 25 du corps 20 est creusée couche par couche sur une zone centrale 29 en laissant le bord de la face supérieure 25 intact. Après plusieurs passages du laser et un certain nombre de couches enlevées, le rebord 27 est formé. Grâce à ce procédé et au dispositif laser, on obtient un rebord 27 dont le côté interne 31 est droit avec des dimensions d'une grande précision. La hauteur du rebord 27 dépend du nombre de couches qui ont été enlevées et de leur épaisseur. Une pierre ayant par exemple une épaisseur de 0.18mm et un diamètre de 0.8mm, a un rebord compris entre 0.02 et 0.08mm.

Le procédé peut également servir pour former une face supérieure 25 en partie convexe 21 et/ou avoir plusieurs niveaux. Sur la figure 5 ou 6, la zone 29 qui a été creusée pour former le rebord 27, comprend une face d'appui 28 pour un contre-pivot, et a une forme convexe depuis la face d'appui 28 jusqu'au trou 14. La face d'appui 28 est plus haute que la zone convexe 21 pour que le contre-pivot repose seulement sur cette partie et pas sur le reste convexe de la zone convexe 21. La convexité permet d'avoir le trou débouchant au plus près du contre-pivot, et de même pour le pivot.

Une face supérieure avec un tel rebord 27 permet par exemple de bloquer latéralement un élément agencé sur la face supérieure de la pierre, comme le montre la figure 7. Dans le cas d'un palier pour un axe balancier, dans lequel la pierre 30 sert d'élément de guidage, on peut disposer une pierre contre-pivot 35 de telle sorte qu'elle soit bloquée latéralement par le côté interne 31 du rebord 27 tout en reposant sur la face d'appui 28. La pierre contre-pivot est dimensionnée pour correspondre à la zone 29 de la pierre ayant subi l'ablation laser. L'élément forme un support axial et radial du contre-pivot dans le logement. Le contre-pivot 35 est emboîté dans l'élément de guidage 30 pour le supporter axialement et le maintenir latéralement.

Ainsi, on obtient un ensemble comprenant un élément de guidage et un contre-pivot. Les deux peuvent être utilisés dans un palier amortisseur en particulier. Un tel élément de guidage permet de se passer d'un chaton qui maintient l'élément de guidage dans le palier.

Selon d'autres modes de réalisation, l'étape d'ablation laser permet le creusement d'une face périphérique du corps pour former une face périphérique évasée du corps. La pierre obtenue a une face périphérique biseautée reliant une face inférieure de plus petite surface à une face supérieure de plus grande surface. Une telle face périphérique permet de faire glisser la pierre sur une face oblique du bloc amortisseur en cas de choc, en particulier pour transformer un mouvement radial en mouvement axial. Ainsi, on peut obtenir la face périphérique 22 des figures 4 à 6 pour un corps monocristallin ou polycristallin. Ainsi, pour le corps polycristallin, on évite de le faire pendant l'étape d'usinage du deuxième mode de réalisation.

Enfin, on peut fonctionnaliser la surface inférieure de la pierre en creusant un cône à l'entrée du trou débouchant. Grâce à ce cône, si le pivot sort du trou à cause d'un choc, le pivot retourne dans le trou sans être abîmé par l'arête du bord du trou. Dans les figures des pierres, le cône est ébauché dans une phase préalable, notamment dans l'exemple du corps polycristallin. Cependant, le cône peut être percé par le procédé selon l'invention sans avoir besoin d'un cône d'ébauche, que cela soit avec un corps minéral monocristallin ou polycristallin.

Il est encore possible de creuser le trou traversant dans la pierre. Cette étape de procédé permet de percer le trou directement à la bonne dimension, sans avoir à passer par une ébauche, puis une étape d'usinage pour que le trou ait des dimensions exactes et homogènes sur toute la hauteur du trou.

D'autres formes, non représentées sur les figures, peuvent être obtenues par ce procédé. Par exemple, l'étape d'ablation laser comprend le creusement d'un évidement de rétention d'huile autour du trou traversant sur une face du corps. On peut aussi effectuer l'ablation d'au moins une partie d'une face de la pierre pour la rendre plane, et/ou pour lui donner une épaisseur déterminée. On peut aussi creuser un élément fonctionnel de forme différente du cône, comme un creux dont le fond est sphérique.

Telle que représentée sur les figures 5 à 7, l'invention porte également sur une pierre 30, susceptible d'être obtenue par le procédé 1, 5 décrit précédemment, la pierre formant par exemple un élément de guidage destiné à être monté dans un palier d'une pièce d'horlogerie. Toutefois, une telle pierre ne saurait se limiter au domaine horloger et peut s'appliquer à tout élément monté mobile par rapport à un palier. La pierre 30 comprend les caractéristiques décrites dans le procédé précédemment. Avantageusement, la pierre 30 est traversée par un trou 14 destiné à recevoir un pivot, également appelé tourillon. La pierre comporte, une surface supérieure 25 et une surface inférieure 26 dont l'une comprend un élément fonctionnel 15a, ici un cône, communiquant avec le trou traversant 14. Autrement dit, le trou 14 communique avec la surface supérieure 26 et avec aussi un évidement sensiblement conique défini dans la surface inférieure 24. Cet évidement forme alors un cône d'engagement de la pierre percée 2.

On remarque également qu'une paroi interne du corps de cette pierre définie au niveau du trou 14 comporte une zone arrondie destinée à minimiser le contact avec le pivot mais également à faciliter une éventuelle lubrification. On notera que la minimisation du contact avec le pivot permet notamment de diminuer les frottements avec le pivot.

Selon l'invention, la face supérieure 25 de la pierre comprend un rebord 27, notamment pour enserrer latéralement un contre-pivot dans le cas d'un palier. Le rebord 27 est de préférence périphérique, c'est-à-dire qu'il délimite le bord de la face supérieure 25 de la pierre 30. De plus, il définit une zone interne 29 de la face supérieure 25 comportant une face d'appui 28 et la sortie du trou débouchant 14, et une zone 21 convexe concentriquement depuis la face d'appui 28 jusqu'au trou 14.

En outre, la pierre a une face périphérique 22 évasée reliant la face inférieure 26 de plus petite surface à la face supérieure 25 de plus grande surface.

On notera que dans une variante de pierre, non représentée sur les figures, la pierre peut comprendre un autre élément fonctionnel défini sur la surface inférieure à la place du cône. L'élément fonctionnel a une forme de creux dont le fond est sphérique. Le creux a la même fonction que le cône. Le creux peut être obtenu par ablation laser ou par usinage par un burin diamanté.

Bien entendu, la présente invention ne se limite pas à l'exemple illustré mais est définie par le jeu de revendications annexé.

## Revendications

1. Procédé (1, 5) de fabrication d'une pierre (30) pour une pièce d'horlogerie, à partir d'un corps minéral (10, 20) de type monocristallin comprenant par exemple du Al₂O₃, ou de type polycristallin comprenant par exemple du polyrubis de type Al₂O₃Cr ou de la Zircone de type ZrO₂, **caractérisé en ce qu'**il comprend une étape d'ablation (3, 11) dans laquelle le corps (10, 20) est soumis à une ablation de matière par balayage sur au moins une face du corps d'un rayonnement laser à impulsions ultra-courtes dont la durée est inférieure à cent picosecondes, **caractérisé en ce que** le rayon est guidé par un système à précession à cinq ou six axes configuré pour annuler au moins en partie l'angle du cône du laser, qui est dû à la focalisation dudit laser.

2. Procédé selon la revendication 1, **caractérisé en ce que** l'ablation (3, 11) est effectuée couche par couche, chaque couche ayant une épaisseur comprise dans un intervalle allant de 1 à 10µm, de préférence de 2 à 4µm.

3. Procédé selon la revendication 1 ou 2, **caractérisé en ce que** les impulsions ont une durée comprise dans un intervalle allant de 200 à 400 fs, de préférence dans un intervalle allant de 250 à 350 fs, voire de 280 à 300 fs.

4. Procédé selon l'une, quelconque, des revendications précédentes, **caractérisé en ce que** le laser a une longueur d'onde comprise dans un intervalle allant de 400 à 600nm, de préférence entre 450 et 550nm, voire de 500nm.

5. Procédé selon l'une, quelconque, des revendications précédentes, **caractérisé en ce que**, le corps minéral (10, 20) étant de type monocristallin, le procédé comprend une étape préalable de fabrication (2) du corps par un procédé de type Verneuil.

6. Procédé selon l'une, quelconque, des revendications 1 à 4, **caractérisé en ce que**, le corps minéral (10, 20) étant de type polycristallin, le procédé comporte les étapes préalables suivantes :
- réalisation (6) d'un précurseur à partir d'un mélange d'au moins un matériau en poudre avec un liant ;
- pressage (7) du précurseur afin de former un corps vert, le pressage état opéré à l'aide d'une matrice supérieure et d'une matrice inférieure, et
- frittage (8) dudit corps vert afin de former le corps (10) minéral de la future pierre dans ledit au moins un matériau.

7. Procédé selon l'une, quelconque, des revendications précédentes, **caractérisé en ce que** le procédé (1, 5) comprend une étape supplémentaire de finition (4, 12), par exemple un rodage et/ou un brossage et/ou un polissage du corps minéral après l'étape laser, en particulier sur les zones d'ablation.

8. Procédé selon l'une, quelconque, des revendications précédentes, **caractérisé en ce que** l'étape d'ablation laser (3, **11)** comprend le creusement d'un trou traversant (14) le corps (10).

9. Procédé selon la revendication précédente, **caractérisé en ce que** l'étape d'ablation laser (3, **11)** comprend le creusement d'un cône d'entrée (15a) du trou traversant (14).

10. Procédé selon l'une, quelconque, des revendications précédentes, **caractérisé en ce que** l'étape d'ablation laser (3, 11) comprend le creusement d'une face (24) pour former un rebord périphérique sur la face (27).

11. Procédé selon l'une, quelconque, des revendications précédentes, **caractérisé en ce que** l'étape d'ablation laser (3, 11) comprend le creusement d'une face (24) pour former une zone convexe (21).

12. Procédé selon l'une, quelconque, des revendications précédentes, **caractérisé en ce que** l'étape d'ablation laser (3, 11) comprend le creusement d'une face périphérique du corps pour former une face périphérique évasée (22) du corps (20).

13. Procédé selon l'une, quelconque, des revendications précédentes, **caractérisé en ce que** l'étape d'ablation laser (3, 11) comprend le creusement d'un évidement de rétention d'huile autour du trou traversant sur une face du corps.

14. Procédé selon l'une, quelconque, des revendications précédentes, **caractérisé en ce que** l'étape d'ablation laser (3, 11) comprend l'ablation d'au moins une partie d'une face (24, 26) de la pierre (20) pour la rendre plane.

15. Pierre minérale de type monocristalline ou polycristalline pour un mouvement d'horlogerie, comprenant par exemple du Al₂O₃ si elle est de type monocristalline, et comprenant par exemple du polyrubis de type Al₂O₃Cr ou de la Zircone de type ZrO₂ si elle est de type polycristalline, la pierre (30) étant susceptible d'être obtenue par le procédé selon l'une quelconque des revendications précédentes, la pierre comprenant une face (25) munie d'un rebord périphérique (27), notamment pour enserrer latéralement un contre-pivot (35) dans un palier, **caractérisée en ce que** ladite face (25) comprend une face d'appui (28), notamment pour le contre-pivot (35), la face d'appui (28) étant disposée au pied du rebord périphérique (27).

16. Pierre selon la revendication 15, **caractérisée en ce que**, la pierre (30) comprenant un trou (14) traversant centré, la face supérieure (25) comprend une zone convexe (21) délimitée entre la face d'appui (28) et le trou (14), la zone étant convexe concentriquement depuis la face d'appui (28) jusqu'au trou (14).

17. Pièce d'horlogerie (27), comprenant une pierre (30) selon l'une, quelconque, des revendications 15 à 16, notamment pour un palier.

## Patentansprüche

1. Verfahren (1, 5) zur Herstellung eines Steins (30) für ein Uhrwerkteil, aus einem Mineralkörper (10, 20) vom monokristallinen Typ, der zum Beispiel Al₂O₃ umfasst, oder vom polykristallinen Typ, der zum Beispiel Polyrubis vom Typ Al₂O₃Cr oder Zirkon vom Typ ZrO₂ umfasst,
**dadurch gekennzeichnet, dass** es einen Ablationsschritt (3, 11) umfasst, bei dem der Körper (10, 20) einer Materialablation durch Abtasten mindestens einer Seite des Körpers mit einer gepulsten Laserstrahlung mit ultrakurzen Impulsen unterzogen wird, deren Dauer weniger als hundert Pikosekunden beträgt, wobei der Strahl durch ein Präzessionssystem mit fünf oder sechs Achsen geführt wird, das so konfiguriert ist, dass es den durch die Fokussierung des Lasers bedingten Kegelwinkel des Lasers zumindest teilweise aufhebt.

2. Verfahren nach Anspruch 1, **dadurch gekennzeichnet, dass** die Ablation (3, 11) schichtweise erfolgt, wobei jede Schicht eine Dicke im Bereich von 1 bis 10 µm, vorzugsweise von 2 bis 4 µm, aufweist.

3. Verfahren nach Anspruch 1 oder 2, **dadurch gekennzeichnet, dass** die Impulse eine Dauer im Bereich von 200 bis 400 fs, vorzugsweise im Bereich von 250 bis 350 fs, oder sogar von 280 bis 300 fs haben.

4. Verfahren nach einem beliebigen der vorstehenden Ansprüche, **dadurch gekennzeichnet, dass** der Laser eine Wellenlänge im Bereich von 400 bis 600 nm, vorzugsweise zwischen 450 und 550 nm, oder sogar bis zu 500 nm hat.

5. Verfahren nach einem beliebigen der vorstehenden Ansprüche, **dadurch gekennzeichnet, dass** das Verfahren, da der Mineralkörper (10, 20) vom monokristallinen Typ ist, einen vorangehenden Schritt zur Herstellung (2) des Körpers durch ein Verfahren vom Typ Verneuil umfasst.

6. Verfahren nach einem beliebigen der Ansprüche 1 bis 4, **dadurch gekennzeichnet, dass** das Verfahren, da der Mineralkörper (10, 20) vom polykristallinen Typ ist, die folgenden vorherigen Schritte umfasst:
- Herstellung (6) eines Vorläufers aus einer Mischung von mindestens einem pulverförmigen Material mit einem Bindemittel;
- das Pressen (7) des Vorläufers, um einen grünen Körper zu bilden, wobei das Pressen mit Hilfe einer oberen und einer unteren Matrize erfolgt, und
- Sinterung (8) des grünen Körpers, um den (10) mineralischen Körper des zukünftigen Steins in dem mindestens einen Material zu bilden.

7. Verfahren nach einem beliebigen der vorstehenden Ansprüche, **dadurch gekennzeichnet, dass** das Verfahren (1, 5) einen zusätzlichen Endbarbeitungsschritt (4, 12) umfasst, zum Beispiel ein Läppen und/oder Bürsten und/oder Polieren des Mineralkörpers nach dem Laserschritt, insbesondere an den Ablationsbereichen.

8. Verfahren nach einem beliebigen der vorstehenden Ansprüche, **dadurch gekennzeichnet, dass** der Schritt der Laserablation (3, 11) die Bohrung eines Lochs umfasst, das (14) den Körper (10) durchquert.

9. Verfahren nach dem vorstehenden Anspruch, **dadurch gekennzeichnet, dass** der Schritt der Laserablation (3, 11) das Aushöhlen eines Eingangskegels (15a) des Durchgangslochs (14) umfasst.

10. Verfahren nach einem beliebigen der vorstehenden Ansprüche, **dadurch gekennzeichnet, dass** der Schritt der Laserablation (3, 11) das Aushöhlen einer Fläche (24) umfasst, um einen umlaufenden Rand auf der Fläche (27) zu bilden.

11. Verfahren nach einem beliebigen der vorstehenden Ansprüche, **dadurch gekennzeichnet, dass** der Schritt der Laserablation (3, 11) das Aushöhlen einer Fläche (24) umfasst, um einen konvexen Bereich (21) zu bilden.

12. Verfahren nach einem beliebigen der vorstehenden Ansprüche, **dadurch gekennzeichnet, dass** der Schritt der Laserablation (3, 11) das Ausheben einer umlaufenden Fläche des Körpers umfasst, um eine ausgestellte umlaufende Fläche (22) des Körpers (20) zu bilden.

13. Verfahren nach einem beliebigen der vorstehenden Ansprüche, **dadurch gekennzeichnet, dass** der Schritt der Laserablation (3, 11) das Aushöhlen einer Ölauffangvertiefung um das Durchgangsloch auf einer Seite des Körpers umfasst.

14. Verfahren nach einem beliebigen der vorstehenden Ansprüche, **dadurch gekennzeichnet, dass** der Schritt der Laserablation (3, 11) die Entfernung mindestens eines Teils einer Fläche (24, 26) des Steins (20) umfasst, um diese eben zu machen.

15. Mineralstein vom monokristallinen oder polykristallinen Typ für ein Uhrwerk, der zum Beispiel Al₂O₃ umfasst, wenn es sich um einen monokristallinen Typ handelt, und zum Beispiel Polyrubis vom Typ Al₂O₃Cr oder Zirkon vom Typ ZrO₂ enthält, wenn es sich um einen polykristallinen Typ handelt, wobei der Stein (30) durch das Verfahren nach einem beliebigen der vorstehenden Ansprüche hergestellt werden kann, wobei der Stein eine Fläche (25) mit einem umlaufenden Rand (27) aufweist, insbesondere um seitlich einen Deckstein (35) in einem Lager einzuklemmen, **dadurch gekennzeichnet, dass** diese Fläche (25) eine Auflagefläche (28) umfasst, insbesondere für den Deckstein (35), wobei die Auflagefläche (28) am Fuß des umlaufenden Randes (27) angeordnet ist.

16. Stein gemäß Anspruch 15, **dadurch gekennzeichnet, dass** der Stein (30) ein zentriertes Durchgangsloch (14) aufweist, die Oberseite (25) eine konvexe Zone (21) aufweist, die zwischen der Auflagefläche (28) und dem Loch (14) begrenzt ist, wobei der Bereich von der Auflagefläche (28) bis zur Bohrung (14) konzentrisch konvex ist.

17. Uhrwerkteil (27), umfassend einen Stein (30) nach einem beliebigen der Ansprüche 15 bis 16, insbesondere für ein Lager.

## Claims

1. A method (1, 5) for manufacturing a stone (30) for a timepiece, from a mineral body (10, 20) of the monocrystalline type comprising, for example, Al₂O₃, or of the polycrystalline type comprising, for example, Al₂O₃Cr-type poly ruby or ZrO₂-type zirconia, **characterised in that** it comprises an ablation step (3, 11) in which material is removed from the body (10, 20) by scanning at least one face of the body with ultra-short-pulse laser radiation lasting less than one hundred picoseconds, **characterised in that** the beam is guided by a precession system with at least five or six axes configured to at least partially cancel the angle of the laser cone, which is due to the focus of said laser.

2. The method according to claim 1, **characterised in that** the ablation (3, 11) is performed layer by layer, each layer having a thickness comprised within a range of from 1 to 10 µm, preferably of from 2 to 4 µm.

3. The method according to claim 1 or 2, **characterised in that** the pulses have a duration comprised within a range of from 200 to 400 fs, preferably within a range of from 250 to 350 fs, or even of from 280 to 300 fs.

4. The method according to any of the preceding claims, **characterised in that** the laser has a wavelength comprised within a range of from 400 to 600 nm, preferably between 450 and 550 nm, or even of 500 nm.

5. The method according to any of the preceding claims, **characterised in that**, the mineral body (10, 20) being of the monocrystalline type, the method comprises a prior step (2) in which the body is manufactured using a Verneuil-type method.

6. The method according to any of claims 1 to 4, **characterised in that**, the mineral body (10, 20) being of the polycrystalline type, the method involves the following preliminary steps:
- producing (6) a precursor from a mixture of at least one powdered material with a binder;
- pressing (7) the precursor in order to form a green body, the pressing being carried out using an upper die and a lower die, and
- sintering (8) said green body in order to form the mineral body (10), of the future stone in said at least one material.

7. The method according to any of the preceding claims, **characterised in that** the method (1, 5) comprises an additional finishing step (4, 12), for example lapping and/or brushing and/or polishing the mineral body after the laser step, in particular on the ablation zones.

8. The method according to any of the preceding claims, **characterised in that** the laser ablation step (3, 11) comprises drilling a hole (14) through the body (10).

9. The method according to the preceding claim, **characterised in that** the laser ablation step (3, 11) comprises hollowing out an inlet cone (15a) in the through hole (14).

10. The method according to any of the preceding claims, **characterised in that** the laser ablation step (3, 11) comprises hollowing out a face (24) to form a peripheral rim on the face (27).

11. The method according to any of the preceding claims, **characterised in that** the laser ablation step (3, 11) comprises hollowing out a face (24) to form a convex zone (21).

12. The method according to any of the preceding claims, **characterised in that** the laser ablation step (3, 11) comprises hollowing out a peripheral face on the body to form a flared peripheral face (22) on the body (20).

13. The method according to any of the preceding claims, **characterised in that** the laser ablation step (3, 11) comprises hollowing out an oil retention recess around the through hole on a face on the body.

14. The method according to any of the preceding claims, **characterised in that** the laser ablation step (3, 11) comprises the ablation of at least part of a face (24, 26) of the stone (20) to make it planar.

15. A monocrystalline or polycrystalline mineral stone for a horology movement, comprising, for example, Al₂O₃ if it is monocrystalline and comprising, for example, Al₂O₃Cr-type polyruby or ZrO₂-type zirconia if it is polycrystalline; the stone (30) can be produced using the method according to any of the preceding claims, the stone comprising a face (25) with a peripheral flange (27), in particular for laterally gripping a counter-pivot (35) in a bearing, **characterised in that** said face (25) comprises a bearing face (28), in particular for the counter-pivot (35), the bearing face (28) being arranged at the foot of the peripheral flange (27).

16. The stone according to claim 15, **characterised in that**, the stone (30) comprising a centred through hole (14), the upper face (25) comprises a convex zone (21) delimited between the bearing face (28) and the hole (14), the zone being convex concentrically from the bearing face (28) to the hole (14).

17. A timepiece (27), comprising a stone (30) according to any of claims 15 to 16, in particular for a bearing.
